# EUROPEAN PATENT SPECIFICATION

(11) **EP 1 925 631 B1**
(45) Date of publication and mention of the grant of the patent: **26.03.2014**
(21) Application number: 06796351.2
(22) Date of filing: 11.08.2006
(51) Int. Cl.: C08G 18/83, C08K 3/22, G02B 1/10, C08K 9/06, C08J 7/04

(54) **COMPOSITE POLYMER, THERMOSETTING COATING COMPOSITION, AND MOLDED ARTICLE**
VERBUNDPOLYMER, WARMHÄRTENDE BESCHICHTUNGSZUSAMMENSETZUNG UND FORMKÖRPER
POLYMERE COMPOSITE, COMPOSITION DE REVETEMENT THERMODURCISSABLE, ET ARTICLE MOULE

(30) Priority: 30.08.2005 JP 2005249229
(43) Date of publication of application: 28.05.2008
(73) Proprietor: JGC Catalysts and Chemicals Ltd., Kawasaki-shi, Kanagawa 210-0013 (JP)
(72) Inventor: TANAKA, Hirokazu, deceased (JP); MURAI, Sachio, Kawasaki-shi Kanagawa, 212-0013 (JP); ITO, Hideki, Kitakyushu-shi, Fukuoka, 808-0027 (JP); MIYANO, Yoshifumi, Kitakyushu-shi, Fukuoka, 8080027 (JP)
(74) Representative: Campbell, Neil Boyd
(86) International application number: PCT/JP2006/315913
(87) International publication number: WO 2007/026529

(56) References cited:
- JP-A- 06 065 475
- JP-A- H06 118 203
- JP-A- H06 337 376
- JP-A- 2000 080 212
- JP-A- 2002 298 648
- JP-A- 2003 277 509
- JP-A- 2004 091 765
- DATABASE WPI Week 199211 Thomson Scientific, London, GB; AN 1992-085634 XP002668112, & JP 4 029393 A (SHINETSU CHEM IND CO LTD) 31 January 1992 (1992-01-31)

## Description

### TECHNICAL FIELD

The present invention relates to a composite polymer obtained by reacting an elastomer with metal fine particles, a thermosetting coating composition and an article. More particularly, the invention relates to a composite polymer and a thermosetting coating composition which are favorable for forming a primer layer, arranged between a plastic base material (particularly plastic lens base material having excellent transparency) and a hard coat layer (particularly silicone-based hard coat layer), and an article having a primer layer formed by using them, typically an optical article such as a spectacle lens.

### BACKGROUND ART

As materials of optical lenses, particularly spectacle lenses, plastic base materials have been frequently used instead of inorganic glass base materials in recent years. The reason is that the plastic base materials are excellent in properties such as lightweight property, impact resistance, processability and dyeing property, and besides, improvement and development of the materials as plastic lenses of the second generation have been made to promote further lightening and higher refractive index. These plastic base materials, however, have a disadvantage that they are liable to be scratched as compared with the inorganic glass base materials.

In order to avoid this disadvantage, the surface of an optical lens using the plastic base material is usually provided with a silicone-based curable coating film, that is, a hard coat layer. In the case of using a plastic lens base material having a high refractive index, further, a treatment of incorporating metal oxide fine particles to the hard coat layer so as to allow the refractive index of the hard coat layer to agree with the refractive index of the lens base material is carried out in order to avoid interference of light (appears as interference fringes) that occurs between the lens and the hard coat layer. For example, in a patent document 1, use of composite oxide fine particles containing titanium oxide, zirconium oxide and antimony pentoxide as the metal oxide fine particles has been disclosed. Also the present inventors have proposed, in a patent document 2, use of core-shell type metal oxide fine particles formed by coating each particle surface of metal oxide fine particles (core particles) containing titanium oxide with a coating layer composed of antimony oxide.

On the other hand, an optical lens obtained by forming a hard coat layer on a surface of a plastic lens base material and further forming an antireflection coating layer thereon has a disadvantage of poor impact resistance. As a means to remove this disadvantage, a technique of forming a primer layer between the plastic lens base material and the hard coat layer has been proposed in, for example, a patent document 3.

As the plastic lens base materials, materials having higher refractive index have been desired, and therefore, polythiourethane lens and polythioepoxy lens have been used recently. Some of these base materials, however, have poor adhesion, so that the need of formation of the primer layer is further increased.

In the case where the plastic lens base material having high refractive index is used, it is necessary to adjust the refractive index of the primer layer to be equivalent to that of the lens. As techniques for this, there have been proposed, for example, a method of forming a primer layer containing a thermosetting urethane resin and colloidal metal oxide fine particles containing titanium oxide (patent document 4) and a method of forming a primer layer containing a polyurethane resin and fine particles of metal oxides such as zinc oxide, silicon dioxide, aluminum oxide, titanium oxide, zirconium oxide, tin oxide, beryllium oxide, antimony oxide, tungsten oxide and cerium oxide (patent document 5). In these techniques, the metal oxide fine particles are added for the purposes of controlling refractive index of the coating film (inhibition of interference of light), enhancing strength of the coating film, etc.

The above techniques to form the primer layer are broadly divided into a method using a thermosetting resin (referred to as a "thermosetting primer-forming method" hereinafter) and a method using a thermoplastic resin (referred to as a "thermoplastic primer-forming method" hereinafter).

In the case where the thermosetting primer-forming method is used, curing of the thermosetting resin needs a long time, and besides, there is a problem that evil influence is exerted on adhesion of the primer layer to the hard coat layer formed thereon and scratch resistance of the primer layer, depending upon the cured state of the primer layer. That is to say, if curing of the primer layer is insufficient, hardness of the hard coat layer laminated thereon becomes insufficient. If the primer layer is cured too much, adhesion of the primer layer to the hard coat layer tends to be lowered. In the thermosetting primer-forming method, therefore, processing in an unstable state is required, so that this method is undesirable for the production of optical lenses such as spectacle lenses.

On the other hand, in the case where the thermoplastic primer-forming method is used, the above-mentioned production problems are decreased, but there is a disadvantage that the heat resistance of an optical lens obtained by the method is lowered. Moreover, when a primer layer having high refractive index is formed, the thermoplastic resin and the metal oxide fine particles form a sea-island structure to cause light scattering, and therefore, an opaque coating film (primer film) tends to be formed.
Patent document 1: Japanese Patent Laid-Open Publication No. 264806/1993
Patent document 2: Japanese Patent Laid-Open Publication No. 363442/2002
Patent document 3: Japanese Patent Laid-Open Publication No. 505896/1996
Patent document 4: Japanese Patent Laid-Open Publication No. 118203/1994
Patent document 5: Japanese Patent Laid-Open Publication No. 337376/1994

### DISCLOSURE OF THE INVENTION

### PROBLEM TO BE SOLVED BY THE INVENTION

The present invention has been made in order to solve such problems associated with the prior art as mentioned above, and it is an object of the invention to provide a material favorable for forming a primer layer which has not only high transparency but also excellent adhesion to a hard coat layer and is excellent also in scratch resistance, heat resistance, weathering resistance, dyeing property, impact resistance and the like.

It is another object of the invention to provide a material favorable for efficiently and stably forming a primer layer on a surface of a plastic lens base material.

It is a further object of the invention to provide an article having high transparency and excellent heat resistance, e.g., an optical article such as an optical lens

### MEANS TO SOLVE THE PROBLEM

In order to solve the above problems, the present inventors have earnestly studied, and as a result, they have found that the above problems can be solved by a composite polymer obtained by reacting a water-dispersible urethane elastomer having a carboxyl group with metal oxide fine particles each having an epoxy ring-containing group on the surface. Based on the finding, the present invention has been accomplished.

The composite polymer of the present invention is obtained by reacting:
(A) a water-dispersible urethane elastomer having a carboxyl group with
(B) metal oxide fine particles each having an epoxy ring-containing group on the surface.

The elastomer (A) preferably has the following properties (i) and (ii):
(i) the glass transition point (Tg) is not higher than 0°C, and
(ii) the elongation (elongation at break in accordance with JIS K6251) is in the range of 200 to 1,000%.

The elastomer (A) is a water-dispersible urethane elastomer.

The water-dispersible urethane elastomer is preferably obtained by reacting a polyisocyanate compound with a polyol compound in the presence of an acid diol compound.

The metal oxide fine particles (B) are preferably fine particles of an oxide and/or fine particles of a composite oxide of one or more metallic elements selected from the group consisting of Ti, Fe, Zn, W, Sn, Ta, Zr, Sb, Nb, In, Ce, Si, Al, Y, Pb and Mo, each of said fine particles having an epoxy ring-containing group on the surface.

The metal oxide fine particles (B) are preferably obtained by treating surfaces of fine particles of an oxide and/or fine particles of a composite oxide of one or more metallic elements selected from the group consisting of Ti, Fe, Zn, W, Sn, Ta, Zr, Sb, Nb, In, Ce, Si, Al, Y, Pb and Mo with a silane coupling agent having an epoxy ring-containing group.

The metal oxide fine particles (B) are preferably obtained by forming a coating layer composed of a composite oxide of Si and Zr⁻ and/or Al on surfaces of fine particles of an oxide and/or fine particles of a composite oxide of one or more metallic elements selected from the group consisting of Ti, Fe, Zn, W, Sn, Ta, Zr, Sb, Nb, In, Ce, Si, Al, Y, Pb and Mo and treating a surface of the coating layer with a silane coupling agent having an epoxy ring-containing group.

The epoxy ring-containing group of the metal oxide fine particles (B) is preferably a glycidyl group.

The metal oxide fine particles (B) preferably have a mean particle diameter of 1 to 50 nm.

A weight ratio ((A)/(B)) of the elastomer (A) to the metal oxide fine particles (B) is preferably in the range of 90/10 to 30/70.

The composite polymer preferably has a chemical structure represented by the following formula (I):

-CH₂CH(OH)CH(R^{a})OCO- (I)

wherein R^{a} is -H, -CH₃ or -CH₂-.

The thermosetting coating composition of the present invention comprises the above-mentioned composite polymer.

The article of the present invention, such as an optical article, has:
a plastic base material,
a primer layer formed on an upper surface of the plastic base material and comprising a thermally cured product of the above-mentioned composite polymer, and
a hard coat layer formed on an upper surface of the primer layer.

The primer layer preferably has a thickness of 0.2 to 5.0 µm. Further, the primer layer preferably has a refractive index of not less than 1.52.

The primer layer is preferably formed from the above-mentioned thermosetting coating composition.

On an upper surface of the hard coat layer, a layer of an antireflection film is preferably formed.

The optical article is preferably an optical lens.

### EFFECT OF THE INVENTION

By the use of the composite polymer and the thermosetting coating composition of the invention, a primer layer can be efficiently and stably formed on an upper surface of a plastic lens base material. This primer layer also has excellent adhesion to a hard coat layer that is formed on its upper surface, and therefore, productivity of optical articles, typically optical lenses such as spectacle lenses, can be greatly enhanced.

Further, the primer layer has not only high transparency but also excellent adhesion to a hard coat layer and is excellent also in scratch resistance, heat resistance, weathering resistance, dyeing property, impact resistance and the like.

The article of the invention, e.g., an optical article such as an optical lens, exhibits extremely high transparency and has excellent heat resistance.

### BEST MODE FOR CARRYING OUT THE INVENTION

The composite polymer, the thermosetting coating composition and the article of the invention are described in more detail hereinafter.

### Composite polymer

The composite polymer of the invention is a product obtained by reacting (A) a water-dispersible urethane elastomer having a carboxyl group with (B) metal oxide fine particles each having an epoxy ring-containing group on the particle surface.

### (A) Water-dispersible urethane Elastomer having carboxyl group

As the water-dispersible urethane elastomer (A) having a carboxyl group (also referred to as an "elastomer (A)" simply hereinafter) for use in the invention, there can be mentioned, for example,
a polyurethane elastomer that is a reaction product of an acid diol and a polyol compound, such as 2,2-dimethylolpropionic acid, 2,2-dimethylolbutyric acid or 2,2-dimethylolvaleric acid, with a polyisocyanate, or
a polyester elastomer that is a reaction product of an aromatic dicarboxylic acid, such as terephthalic acid or 2,6-naphthalenedicarboxylic acid, or a straight chain saturated aliphatic dicarboxylic acid having 4 to 10 carbon atoms with glycol and has a residue of a carboxyl group.

Of the above elastomers, a water-dispersible urethane elastomer is preferable from the viewpoints of impact resistance and adhesion to a hard coat layer, and a water-dispersible urethane elastomer of self-emulsification type particularly in water is preferable from the viewpoint of particle diameters of emulsion particles.

The water-dispersible urethane elastomer is usually composed of a hard segment and a soft segment, and the former is frequently obtained by the reaction of a polyisocyanate compound with a short-chain polyol compound, while the latter is frequently obtained by the reaction of a polyisocyanate compound with a long-chain polyol compound.

Examples of the polyisocyanate compounds include aromatic diisocyanate compounds, such as 2,4-tolylene diisocyanate, 2,6-tolylene diisocyanate, 4,4'-diphenylmethane diisocyanate, m-phenylene diisocyanate and xylylene diisocyanate; and aliphatic isocyanate compounds, such as tetramethylene diisocyanate, hexamethylene diisocyanate, 1,4-cyclohexylene diisocyanate, 4,4'-dicyclohexylmethane diisocyanate and isophorone diisocyanate. Of these, a non-yellowing aliphatic isocyanate compound is preferably used in the invention from the viewpoint of weathering resistance of the primer layer.

Examples of the short-chain polyol compounds include ethylene glycol, diethylene glycol, dipropylene glycol, 1,2-propanediol, 1,3-propanediol, 1,2-butanediol, 1,3-butanediol, 1,4-butanediol, 1,5-pentanediol, 1,6-hexanediol and neopentyl glycol. Of these, 1,4-butanediol, 1,5-pentanediol or the like is preferably used.

The short-chain polyol compound functions as a chain extender in the synthesis of the water-dispersible urethane elastomer, and a polyamine having such a function, such as ethylenediamine, propylenediamine, hexamethylenediamine, diethylenetriamine and triethylenetetramine, can be used instead of the short-chain polyol compound or together with the short-chain polyol compound. Of such polyamines, ethylenediamine, propylenediamine, hexamethylenediamine or the like is preferably used in the invention.

Examples of the long-chain polyol compounds include polyester polyol compounds, such as polyethylene adipate, polyethylene propylene adipate, polybutylene adipate, polyhexamethylene adipate, polydiethylene adipate, polyethylene terephthalate, polyhexamethylene isophthalate adipate, poly-ε-caprolactone diol, and a polycondensate of 1,6-hexanediol and a dimer acid; polyether polyol compounds, such as polyalkylene glycol; and polycarbonate polyol compounds, such as polyhexamethylene carbonate diol. Of these, the polyester polyol compounds and the polycarbonate polyol compounds are preferably used. In the present invention, however, the latter compounds, i.e., polycarbonate polyol compounds, are particularly preferably used.

In order to obtain the water-dispersible urethane elastomer, it is preferable to add an acid diol compound in each of the hard segment preparation and the soft segment preparation.

Examples of the acid diol compounds include 2,2-dimethylolpropionic acid, 2,2-dimethylolbutyric acid and 2,2-dimethylolvaleric acid. Of these, 2,2-dimethylolpropionic acid is preferably used.

The acid diol compound is desirably added in an amount of 1 to 15% by weight, preferably 2 to 10% by weight, based on the total amount of the polyol compounds, that is, the short-chain diol compound and the long-chain diol compound. If the amount of the acid diol compound added is less than 1% by weight, dispersion stability of the water-dispersible urethane elastomer in water is sometimes deteriorated. Moreover, when a coating composition for forming a primer layer, which contains the water-dispersible urethane elastomer, is cured after it is applied to a plastic lens base material, sufficient crosslinking reaction sometimes does not take place. Therefore, strength of the coating film (primer layer) is lowered, and besides, it sometimes causes opaqueness of the coating film. If the amount of the acid diol compound added exceeds 15% by weight, impact resistance of the resulting optical lens is sometimes lowered.

When the polyisocyanate compound and the polyol compound (i.e., the short-chain polyol compound, the long-chain polyol compound and the acid diol compound) are reacted with each other, although the ratio of the amount used varies depending upon the compounds used, the molar ratio between them (polyisocyanate compound:polyol compound) is desired to be in the range of 0.9-3.0:1, preferably 1.0-2.0:1. If the molar ratio of the polyisocyanate compound to the polyol compound is less than 0.9, molecular weight of the prepolymer sometimes becomes high, and this is an obstacle to the subsequent reaction. If the molar ratio exceeds 3.0, impact resistance of the primer layer is deteriorated, so that desired properties are not obtained occasionally.

The water-dispersible urethane elastomer is prepared by a publicly known process using the above compounds, that is, the polyisocyanate compound, the polyol compound and the acid diol compound.

This preparation process is more specifically described below. (1) The polyisocyanate compound and the long-chain polyol compound are mixed with an organic solvent having no functional group containing active hydrogen, and urethanation reaction is carried out under the temperature conditions of 10 to 100°C, preferably 30 to 80°C, using a catalyst if necessary, to prepare a prepolymer. (2) Subsequently, the prepolymer is neutralized with a neutralizing agent at a temperature of not higher than 60°C, preferably not higher than 50°C, then the prepolymer is subjected to chain extension using the short-chain polyol compound or a polyamine, then water is added, and the organic solvent is removed, whereby the water-dispersible urethane elastomer is obtained.

In this case, the polyurethane may be synthesized by a one-shot process wherein the short-chain polyol compound and the long-chain polyol compound are added at the same time as the polyol compounds, but the polyurethane is preferably synthesized by a prepolymer process wherein the long-chain polyol compound is added previously and reacted preferentially and then the short-chain diol compound is added.

Examples of the neutralizing agents include ammonia, trimethylamine, triethylamine, tripropylamine, tributyl amine, triethanolamine, sodium hydroxide and potassium hydroxide. Of these, triethylamine, triethanolamine or the like is preferably used. The neutralizing agent is preferably added in an amount capable of neutralizing an acid group of the acid diol compound.

The number-average molecular weight of the elastomer (A) is desired to be not less than 5,000, preferably 10,000 to 200,000.

The glass transition point (Tg) of the elastomer (A) is preferably not higher than 0°C from the viewpoint of use environment of optical articles, and the elongation of the elastomer (A) is preferably in the range of 200 to 1,000% from the viewpoints of impact resistance and heat resistance. The term "elongation" used herein means elongation at break in accordance with JIS K6251.

### (B) Metal oxide fine particles each having epoxy ring-containing group on the surface

The metal oxide fine particles (B) each having an epoxy ring-containing group on the surface for use in the invention are, for example, fine particles of an oxide and/or fine particles of a composite oxide of one or more metallic elements selected from the group consisting of Ti, Fe, Zn, W, Sn, Ta, Zr, Sb, Nb, In, Ce, Si, Al, Y, Pb and Mo, each of said fine particles having an epoxy ring-containing group on the particle surface. More specifically, there can be mentioned metal oxide fine particles each having an epoxy ring-containing group wherein an epoxy ring-containing group has been introduced onto the fine particle surface by treating the surfaces of fine particles of an oxide and/or fine particles of a composite oxide of one or more metallic elements selected from the group consisting of Ti, Fe, Zn, W, Sn, Ta, Zr, Sb, Nb, In, Ce, Si, Al, Y, Pb and Mo with a silane coupling agent having an epoxy ring-containing group (also referred to as "simple particle type metal oxide fine particles" hereinafter), and metal oxide fine particles each having an epoxy ring-containing group wherein an epoxy ring-containing group has been introduced onto the fine particle surface by forming a coating layer composed of a composite oxide of Si and Zr and/or Al on the surfaces of fine particles of an oxide and/or fine particles of a composite oxide of one or more metallic elements selected from the group consisting of Ti, Fe, Zn, W, Sn, Ta, Zr, Sb, Nb, In, Ce, Si, Al, Y, Pb and Mo and treating the surface of the coating layer with a silane coupling agent having an epoxy ring-containing group (also referred to as "core-shall type metal oxide fine particles" hereinafter).

In the present invention, the epoxy-ring containing group means a group containing an epoxy ring represented by:

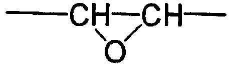

The epoxy ring-containing group is, for example, an epoxy group itself represented by:

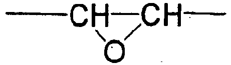

or a glycidyl group represented by:

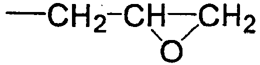

From the viewpoint of processability in the introduction of the epoxy ring-containing group onto the metal oxide fine particle surface, the metal oxide fine particles (B) each having an epoxy ring-containing group on the surface preferably has a glycidyl group as the epoxy ring-containing group. That is to say, the metal oxide fine particles (B) each having an epoxy ring-containing group on the surface are preferably metal oxide fine particles each having a glycidyl group on the surface.

In the present invention, the simple particle type metal oxide fine particles and the core-shell type metal oxide fine particles may be used by mixing them.

From the viewpoint of manufacturing optical lenses having excellent light resistance and weathering resistance, the core-shell type metal oxide fine particles are preferable.

The fine particles of an oxide of a metallic element and/or the fine particles of a composite oxide of metallic elements (also referred to as "raw material metal oxide fine particles" hereinafter) to constitute the metal oxide fine particles (B) may have an anatase crystalline structure or a rutile crystalline structure.

These raw material metal oxide fine particles can be prepared by a publicly known process. For example,
(a) a process for preparing raw material metal oxide fine particles made of a composite oxide containing Ti and Si and
(b) a process for preparing raw material metal oxide fine particles wherein the above raw material metal oxide fine particles have been further coated with a composite oxide containing Si and Zr are briefly described below.

(a) First, a cake of a hydrous titanic acid gel is prepared, and to the cake, hydrogen peroxide and water are added to prepare a peroxytitanic acid aqueous solution. Then, to the aqueous solution is added a silica sol, and the resulting mixture is heat-treated in an autoclave and then subjected to purification such as ion exchange or ultrafiltration to prepare simple particle type raw material fine particles (a) made of a composite oxide containing Ti and Si.

(b) To the simple particle type raw material fine particles (a), a hydrogen peroxide solution of zirconium and a silicic acid solution were added, and the resulting mixture is heat-treated in an autoclave and then subjected to purification such as ion exchange or ultrafiltration to prepare core-shell type raw material metal oxide fine particles (b) wherein the surfaces of the simple particle type metal oxide fine particles (a) have been coated with a composite oxide containing Si and Zr.

These raw material metal oxide fine particles can be prepared in the form of not only a dispersion in water but also a dispersion in other dispersion media such as alcohols, ketones or esters.

The mean particle diameter of the metal oxide fine particles (B) is desired to be in the range of 1 to 50 nm, preferably 3 to 30 nm. If the mean particle diameter is less than 1 nm, dispersion stability is sometimes deteriorated when the metal oxide fine particles (B) are dispersed in a dispersion medium. If the mean particle diameter exceeds 50 nm, opaqueness is found in the coating film (primer layer) containing the metal oxide fine particles, and a transparent coating film is not obtained occasionally.

In the present invention, the mean particle diameter of the metal oxide fine particles indicates a value measured by laser Doppler method. In more detail, the mean particle diameter indicates a value obtained by adding an ammonia-containing distilled water to an aqueous sol of the particles of an oxide of a metallic element and/or the fine particles of a composite oxide of metallic elements to adjust pH of the sol to 9.0, then introducing the sol in a quartz cell having a length of 1 cm, a width of 1 cm and a height of 5 cm and performing measurement using NICOMP^{™} 380 manufactured by Particle Sizing Systems Inc.

Next, a method for giving or introducing an epoxy ring-containing group onto the surface of the metal oxide fine particle is described.

A typical method is a method using a silane coupling agent having an epoxy-ring containing group, which is represented by the following formula (II).

R¹R²ₐSi(OR³)₃₋ₐ (II)

In the formula (II), R¹ is an organic group having an epoxy ring-containing group, and the number of carbon atoms of the organic group is preferably in the range of 3 to 10. R² is hydrogen or a hydrocarbon group having 1 to 4 carbon atoms, and R³ is an alkyl group or an alkoxyalkyl group having 1 to 4 carbon atoms. a is 0 or 1.

Examples of the silane coupling agents include γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane and P-(3,4-epoxycyclohexyl)ethyltributoxysilane. Of these, γ-glycidoxypropyltrimethoxysilane, γ-glycidoxypropyltriethoxysilane or the like is preferably used.

The surface treatment method using the silane coupling agent is briefly described below.
(a) The metal oxide fine particles are dispersed in a methanol solution.
(b) Subsequently, to the methanol solution, a silane coupling agent having an epoxy ring-containing group and water are added, they are reacted for 1 to 24 hours under the temperature conditions of 30 to 60°C, and then the reaction solution is subjected to purification such as ultrafiltration to prepare metal oxide fine particles each having an epoxy ring-containing group on the surface.

Although the mixing ratio of the silane coupling agent to the metal oxide fine particles varies depending upon the type of the silane coupling agent, etc., the weight ratio of the silane coupling agent to the metal oxide fine particles (silane coupling agent/metal oxide fine particles) is desired to be in the range of 2/98 to 35/65, preferably 3/97 to 30/70. If the weight ratio is less than 2/98, reaction with the carboxyl group sometimes becomes difficult to occur in the curing process for forming a coating film (primer layer), and the aimed effect of the invention is not obtained occasionally. Moreover, in the coating composition containing the metal oxide fine particles each having an epoxy ring-containing group on the surface, dispersion stability of the metal oxide fine particles each having an epoxy ring-containing group on the surface is sometimes deteriorated. If the weight ratio exceeds 30/70, impact resistance of an optical lens having a primer layer formed by using the metal oxide fine particles each having an epoxy ring-containing group on the surface is sometimes lowered, and besides, refractive index of the coating film (primer layer) is not increased occasionally.

These metal oxide fine particles may be used singly or by mixing two or more kinds.

### Preparation of composite polymer

The composite polymer of the invention is obtained by reacting the elastomer (A) having a carboxyl group with the metal oxide fine particles (B) each having an epoxy ring-containing group on the surface.

It is thought that the composite polymer has a chemical structure that is formed by the reaction of the carboxyl group of the elastomer (A) with the epoxy ring-containing group present on the surface of the metal oxide fine particle (B) and is represented by the following formula (I) :

-CH₂CH(OH)CH(R^{a})OCO- (I)

wherein R^{a} is -H, -CH₃ or -CH₂-.

More specifically, it is thought that when the elastomer (A) having a carboxyl group is represented by:

HOOC-E,

and

the metal oxide fine particle (B) having an epoxy ring-containing group on the surface is represented by:

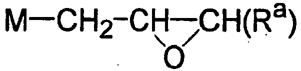

(in the above formulas, E is a part other than one carboxyl group of the elastomer (A); M is a part other than one epoxy ring-containing group of the metal oxide fine particle (B); R^{a} is -H, -CH₃ or -CH₂-R^{b}; and R^{b} is an organic group and may be bonded to M to form a ring structure),
they react with each other in the following manner, and the elastomer (A) and the metal oxide fine particle (B) form a linkage represented by the above formula (I), whereby the composite polymer of the invention is formed.

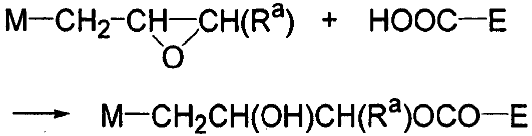

In the case where metal oxide fine particles each having a glycidyl group on the surface are used as the metal oxide fine particles (B) (that is, in the case where the aforesaid R^{a} is -H (hydrogen atom)), it is thought that when the elastomer (A) having a carboxyl group is represented by:

HOOC-E,

and

the metal oxide fine particle (B) having a glycidyl group on the surface is represented by:

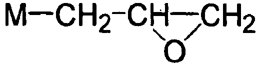

they react with each other in the following manner, and the elastomer (A) and the metal oxide fine particle (B) form a linkage represented by -CH₂CH(OH)CH₂OCO-, whereby the composite polymer of the invention is formed.

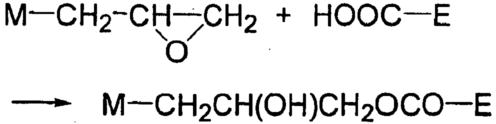

As a process for producing the composite polymer, there can be mentioned a process comprising reacting a mixture of the elastomer (A) and the metal oxide fine particles (B) for 1 to 4 hours under the temperature conditions of 110 to 160°C, preferably 110 to 140°C. More specifically, to the metal oxide fine particles (B) dispersed in water, the elastomer (A) is added, and they are stirred for 1 hour at room temperature to homogeneously disperse the particles. Subsequently, the resulting dispersion is placed in an autoclave and reacted for 1 to 4 hours under the temperature conditions of 110 to 160°C, preferably 110 to 140°C. The composite polymer thus obtained can be prepared in the form of the later-described thermosetting coating composition by cooling the polymer and then diluting it with an organic solvent.

In the production of the composite polymer, a curing accelerator for accelerating the reaction of the carboxyl group of the elastomer (A) with the epoxy ring-containing group on the surface of the metal oxide fine particle (B) may be used. Examples of the curing accelerators include cyclo(dioctyl)pyrophosphate diocyl titanate, dicyclo(dioctyl)pyrophosphate titanate, cyclo(dioctyl)pyrophosphate dioctyl zirconate, cyclo[dineopentyl(diallyl)]pyrophosphate dineopentyl(diallyl)zirconate and alkyl acetoacetate aluminum diisopropylate.

The weight ratio ((A)/(B)) of the elastomer (A) to the metal oxide fine particles (B) for use in the synthesis of the composite polymer is desired to be in the range of 90/10 to 20/80, preferably 80/20 to 30/70. If the weight ratio is less than 20/80, adhesion between a coating film (primer layer) formed from a thermosetting coating composition containing the composite polymer and a hard coat layer formed on the upper surface of the coating film is sometimes deteriorated. Further, in the case where an antireflection coat layer is formed on the upper surface of the hard coat layer, impact resistance of the resulting optical lens is sometimes deteriorated. On the other hand, if the weight ratio exceeds 90/10, heat resistance of a coating film (primer layer) formed from a thermosetting coating composition containing the composite polymer is sometimes deteriorated, and besides, refractive index of the coating film is not increased occasionally.

### Thermosetting coating composition

The thermosetting coating composition of the invention contains the above-described composite polymer of the invention, and from this thermosetting coating composition, a primer layer in the later-described optical article can be favorably formed. The thermosetting coating composition can be prepared by dispersing the composite polymer in solvents (dispersion media), such as water, alcohols, ketones, esters and cellosolves.

More specifically, to the metal oxide fine particles (B) dispersed in water, the elastomer (A) is added, and they are stirred for 1 hour at room temperature to homogeneously disperse the particles. Subsequently, the resulting dispersion is placed in an autoclave and reacted for 1 to 4 hours under the temperature conditions of 110 to 160°C, preferably 110 to 140°C, to synthesize the composite polymer. Thereafter, the composite polymer is cooled and diluted with an organic solvent to prepare the thermosetting coating composition.

Examples of the solvents include water, such as distilled water and pure water; alcohols, such as methanol, ethanol and propanol; ketones, such as methyl ethyl ketone and diacetone alcohol; esters, such as ethyl acetate and butyl acetate; and cellosolves, such as ethyl cellosolve and butyl cellosolve. Of these, water, methanol or the like is preferably used. These solvents may be used singly, or may be used by mixing two or more kinds.

In the thermosetting coating composition, an unreacted elastomer (A) and/or unreacted metal oxide fine particles (B) may be contained.

Further, to the thermosetting coating composition, silicone-based surface active agents, such as polyoxyalkylene dimethylpolysiloxane, or fluorine-based surface active agents, such as perfluoroalkylcarboxylate and perfluoroalkylethylene oxide adduct, can be added in order to improve wettability of a surface of a plastic lens base material when the plastic lens base material is coated with the composition.

Furthermore, benzophenone-based ultraviolet light absorbers, benzotriazole-based ultraviolet light absorbers, hindered amine-based light stabilizers, etc. may be added, when needed.

### Coating method

As a method (coating method) to apply a plastic lens base material surface with the thermosetting coating composition, a publicly known method such as dipping or spin coating can be used.

By thermally curing a coating film composed of the thermosetting coating composition applied to the surface of the plastic lens base material using such a method, a primer layer is formed. The thermal cure is desirably carried out by dividing it into precure and main cure. More specifically, it is desirable that the thermosetting coating composition is applied to the surface of the plastic lens base material, then dried at ordinary temperature (solvent removal) and then subjected to heat treatment for 3 to 30 minutes under the temperature conditions of 60 to 120°C to perform precure, and the surface of the precured coating film is further coated with a coating composition for forming a hard coat layer, followed by heat treatment for 0.5 to 5 hours under the temperature conditions of 80 to 130°C to perform main cure. By carrying out heat treatment in two stages as above, adhesion between the primer layer and the hard coat layer can be further enhanced.

Thus, a primer layer comprising the composite polymer that is a reaction product of the elastomer (A) having a carboxyl group with the metal oxide fine particles (B) each having an epoxy ring-containing group on the surface is formed on the surface of the plastic lens base material.

In more detail, it is thought that the carboxyl group of the elastomer (A) and the epoxy ring-containing group present on the surface of the metal oxide fine particle (B) react with each other to form a coating film containing a composite polymer having a chemical structure represented by the following formula (I). Therefore, the number of the metal oxide fine particles that are present alone in the primer layer becomes zero or extremely decreased.

-CH₂CH(OH)CH(R^{a})OCO- (I)

wherein R^{a} is -H, -CH₃ or -CH₂-, preferably -H (hydrogen atom).

The film thickness of the coating film thus obtained, i.e., primer layer, is desired to be in the range of 0.2 to 5.0 µm, preferably 0.4 to 3.0 µm. If the film thickness is less than 0.2 µm, impact resistance of an optical lens obtained when an antireflection film is formed on the primer layer is sometimes deteriorated. If the film thickness exceeds 5.0 µm, a problem of planar precision of film thickness on the whole surface of the coating film (primer layer) is liable to occur.

By the use of the thermosetting coating composition, a primer layer having a refractive index of not less than 1.52, more specifically 1.60 to 1.80, can be formed.

### Article

The article of the invention, such as an optical article, has a plastic base material, a primer layer formed on an upper surface of the plastic base material and comprising a thermally cured product of the composite polymer, and a hard coat layer formed on an upper surface of the primer layer.

In the present invention, the direction in which the primer layer is present against the plastic base material is referred to as "upper" for convenience.

Preferred examples of the optical articles include optical lenses, such as spectacle lenses and camera lenses, and various display element filters, each of which has a plastic lens base material, a primer layer formed on an upper surface of the plastic lens base material and comprising a thermally cured product of the composite polymer, and a hard coat layer formed on an upper surface of the primer layer. Of these, optical lenses are more preferable. Examples of articles other than the optical articles include plastic articles such as tableware for home use and toys.

### Plastic base material

In the case where the article is an optical lens, the plastic lens base material is not specifically restricted provided that the refractive index of the base material is in the range of 1.49 to 1.80, preferably 1.60 to 1.80. Examples of such plastic lens base,materials include plastic lens base materials made of a polystyrene resin, an allyl resin (particularly aromatic allyl resin), a polycarbonate resin, a polythiourethane resin and a polythioepoxy resin. As these plastic lens base materials, various plastic lens base materials that are commercially available or test-supplied can be used.

Examples of the plastic base materials used for articles other than optical lenses include a PMMA resin, an ABS resin, an epoxy resin and a polysulfone resin.

### Primer layer

In the article of the invention, such as an optical article, the primer layer is formed by applying the aforesaid thermosetting coating composition of the invention to an upper surface of the plastic base material such as a plastic lens base material and thermally curing the composition. The method for forming the primer layer is as described previously.

The primer layer comprises a thermally cured product of the composite polymer.

The film thickness of the primer layer in the article such as an optical article is desired to be in the range of 0.2 to 5.0 µm, preferably 0.4 to 3.0 µm, and the refractive index thereof is desired to be not less than 1.52, preferably 1.60 to 1.80. The refractive index can be controlled by properly determining the types of the elastomer (A) and the metal oxide fine particles (B) that are raw materials of the composite polymer, the mixing ratio, etc.

### Hard coat layer

The coating composition for forming the hard coat layer is not specifically restricted provided that it is a thermosetting coating composition, and in usual, a coating composition containing an alkoxysilane compound, metal oxide fine particles and a curing catalyst is employable. The coating composition is preferably used after proper amounts of a surface active agent and the like are added when needed.

The alkoxysilane compound is, for example, a silane compound represented by the following formula (III) or a hydrolyzate (including partial hydrolyzate) thereof.

R¹ₐR²_{b}Si(OR³)_{4-(a+b)} (III)

In the formula (III), R¹ is an alkyl group having 1 to 6 carbon atoms, or an organic group containing a vinyl group, an epoxy group, an amino group or a methacryloxy group,

R² is an alkyl group having 1 to 3 carbon atoms, a cycloalkyl group having 3 carbon atoms, a halogenated alkyl group having 1 to 3 carbon atoms or ally group, and

R³ is an alkyl group having 1 to 4 carbon atoms, a cycloalkyl group having 3 carbon atoms, an alkoxyalkyl group having 1 to 3 carbon atoms or an arylalkyl group having 7 to 10 carbon atoms.

a is 0 or 1, and b is 0, 1 or 2.

Examples of the alkoxysilane compounds include tetrtaethoxysilane, methyltrimethoxysilane, vinyltrimethoxysilane, γ-methacryloxypropyltrimethoxysilane, trimethylchlorosilane, α-glycidoxymethyltrimethoxysilane, α-glycidoxyethyltrimethoxysilane, β-glycidoxyethyltrimethoxysilane, γ-glycidoxypropyltrimethoxysilane, γ-glycidoxypropyltriethoxysilane, γ-glycidoxypropylmethyldimethoxysilane, γ-glycidoxypropylmethyldiethoxysilane, β-(3,4-epoxycyclohexyl)-ethyltrimethoxysilane, β-(3,4-epoxycyclohexyl)-ethyltriethoxysilane, γ-aminopropyltrimethoxysilane, γ-aminopropyltriethoxysilane, N-β(aminoethyl)-γ-aminopropylmethyldimethoxysilane and N-β(aminoethyl)-γ-aminopropylmethyldiethoxysilane. Of these, tetrtaethoxysilane, methyltrimethoxysilane, γ-glycidoxypropyltrimethoxysilane, γ-glycidoxypropylmethyldiethoxysilane, β-(3,4-epoxycyclohexyl)-ethyltrimethoxysilane or the like is preferably used.

These silane compounds may be used singly or by mixing two or more kinds.

The metal oxide fine particles are not specifically restricted provided that they are metal oxide fine particles obtained by a publicly known process. Examples of such metal oxide fine particles include fine particles of an oxide and/or fine particles of a composite oxide of one or more metallic elements selected from the group consisting of Ti, Fe, Zn, W, Sn, Ta, Zr, Sb, Nb, In, Ce, Si, Al, Y, Pb and Mo, and core-shell type metal oxide fine particles wherein the surfaces of fine particles of an oxide and/or fine particles of a composite oxide of one or more metallic elements selected from the group consisting of Ti, Fe, Zn, W, Sn, Ta, Zr, Sb, Nb, In, Ce, Si, Al, Y, Pb and Mo are coated with a composite oxide of Si and Zr and/or Al.

From the viewpoint of manufacturing an optical lens having excellent light resistance and weathering resistance, the core-shell type metal oxide fine particles are desirable.

The metal oxide fine particles may have an anatase crystalline structure, or may have a rutile crystalline structure.

The surfaces of the metal oxide fine particles may have been treated with a silane compound, an organic acid, an amine or the like.

The mean particle diameter of the metal oxide fine particles is preferably in the range of 1 to 50 nm.

Also the mean particle diameter of the metal oxide fine particles used for forming the hard coat layer indicates a value measured by laser Doppler method, similarly to the measurement of the mean particle diameter of the aforesaid metal oxide fine particles (B).

Examples of the curing catalysts include organic carboxylic acids, such as adipic acid, itaconic acid, malic acid, trimellitic anhydride, pyromellitic anhydride and hexahydrophthalic anhydride; nitrogen-containing compounds, such as imidazole and dicyandiamide; acetylacetone metal chelate compounds represented by the formula M(CH₂COCH₂COCH₃)ₙ (wherein M is a metallic element); metal alkoxides, such as titanium alkoxide and zirconium alkoxide; alkali metal organic carboxylates, such as sodium acetate and potassium acetate; and perchlorates, such as lithium perchlorate and magnesium perchlorate. Of these, adipic acid, itaconic acid, an acetylacetone metal chelate compound or the like is preferably used.

Examples of the surface active agents which are added when needed include silicone-based surface active agents, such as polyoxyalkylene dimethylpolysiloxane, and fluorine-based surface active agents, such as perfluoroalkylcarboxylate and perfluoroalkylethylene oxide adduct. Of these, silicone-based surface active agents are preferably used.

The above components, that is, the alkoxysilane compound, the metal oxide fine particles, the curing catalyst, etc., are mixed with alcohols, such as methanol, ethanol and propanol, ketones, such as methyl ethyl ketone and acetylacetone, esters, such as ethyl acetate and butyl acetate, or cellosolves, such as ethyl cellosolve and butyl cellosolve, similarly to the case of the thermosetting coating composition for forming the primer layer, and the resulting mixture is used as a coating composition for forming the hard coat layer. Of the above solvents, alcohols are preferably used in the invention.

The above solvents may be used singly, or may be used by mixing two or more kinds.

As a coating method using the coating composition for forming the hard coat layer, a publicly known method such as dipping or spin coating can be used, similarly to the case of the coating method to form the primer layer.

By thermally curing a coating film composed of the coating composition for the hard coat layer applied to the surface of the primer layer using such a method, a hard coat layer is formed. This thermal cure is carried out by heat-treating the coating film for 0.5 to 5 hours under the temperature conditions of 80 to 130°C. As previously described, it is preferable to simultaneously perform main cure of the primer layer through this heat treatment for the hard coat layer.

The film thickness of the coating film thus obtained, i.e., hard coat layer, is desired to be in the range of 1.0 to 5.0 µm, preferably 5 to 3.5 µm.

### Antireflection film

The article of the invention, typically an optical article such as an optical lens, is produced by the above process. On the upper surface of the hard coat layer, a layer of an antireflection film may be further formed according to the use purpose. This antireflection film may be a single layer, or may be constituted of plural layers if necessary.

For forming the antireflection film, a publicly known process can be used. As a typical process, there can be mentioned a dry process comprising forming a coating film on the hard coat layer by vacuum deposition, sputtering, ion plating or the like using metal oxides, such as SiO₂, SiO, Ta₂O₅, SnO₂, WO₃, TiO₂, ZrO₂ and Al₂O₃, metal fluorides, such as MgF₂, or other inorganic substances, or a wet process comprising mixing the fine particles of the metal oxide used in the formation of the hard coat layer, such as SiO₂, or fine particles of a metal fluoride such as MgF₂ with an alkoxysilane compound and/or a polyfunctional acrylate compound to prepare a coating composition, applying the coating composition onto the hard coat layer by dipping, spin coating or the like, and then subjecting the composition to heat treatment or UV irradiation treatment to form a coating film.

### EXAMPLES

The present invention is further described with reference to the following examples, but it should be construed that the invention is in no way limited to the scope described in those examples.

### Preparation of coating composition for forming primer layer

### Example 1

### (1) Preparation of metal oxide fine particles each having epoxy ring-containing group

46.833 kg of a titanium tetrachloride aqueous solution having been prepared by adding pure water to titanium tetrachloride (available from Kishida Chemical Co., Ltd.) so that the concentration would become 7.75% by weight in term of TiO₂ concentration and 18.148 kg of aqueous ammonia having a concentration of 15% by weight were mixed to neutralize the titanium tetrachloride aqueous solution. Thereafter, the precipitate was washed with pure water to obtain 27.290 kg of hydrous titanic acid.

To 3.760 kg of the hydrous titanic acid, 5.715 kg of aqueous hydrogen peroxide having a concentration of 35% by weight and 29.574 kg of pure water were added, and they were heated at 80°C for 2 hours to give a solution. Thereafter, 10.95 kg of pure water was added to prepare a polyperoxytitanic acid aqueous solution.

To the resulting polyperoxytitanic acid aqueous solution, 4.453 kg of an aqueous solution of potassium stannate (available from SHOWAKAKOU Co., Ltd.) having a concentration of 1.02% by weight having been prepared so that the amount of Sn would become 45.45 g in terms of SnO₂ was added, and they were sufficiently stirred. Thereafter, the resulting solution was subjected to deionization treatment with a cation exchange resin (Diaion SK1BH available from Mitsubishi Chemical Corporation). After the deionization treatment, 835.5 g of a silica sol (available from Catalysts & Chemicals Industries Co., ltd.) having been prepared so that the amount thereof would become 136.65 g in terms of SiO₂ was added, and 12.8 kg of pure water was further added so that the solids concentration would become 1% by weight. Subsequently, the solution having a solids concentration of 1% by weight was placed in an autoclave having an internal volume of 100 liters, and with stirring, the solution was heated at 175°C for 18 hours to perform hydrolysis. The resulting colloidal solution was concentrated to prepare 6.575 kg of a water dispersion sol (referred to as a "preparation liquid-A" hereinafter) containing, as solids content, 10% by weight of a composite oxide of titanium, tin and silicon (also referred to as "metal oxide fine particles (1)" hereinafter).

Next, to 250.15 kg of an aqueous solution of zirconium oxychloride having been prepared by adding 237 kg of pure water to 13.15 kg of zirconium oxychloride (available from Taiyo Koko Co., Ltd.) so that the concentration would become 2% by weight in term of ZrO₂ concentration, aqueous ammonia having a concentration of 15% by weight was added to obtain a slurry of a zirconia gel of pH 8.5. The slurry was subjected to filtration washing to obtain a cake of a substance having a concentration of 10% by weight in terms of ZrO₂ concentration.

To 85 g of the resulting cake of the substance, 0.775 kg of pure water was added, and a KOH aqueous solution was further added to make the resulting liquid alkaline. Thereafter, 170 g of aqueous hydrogen peroxide (available from Kishida Chemical Co., Ltd.) having a concentration of 35% by weight was further added, and the resulting liquid was heated to dissolve the cake of the substance. Thus, 1.7 kg of a hydrogen peroxide solution of zirconium (referred to as a "preparation liquid-B" hereinafter) having a concentration of 0.5% by weight in terms of ZrO₂ concentration was prepared.

Further, commercially available water glass (available from Dokai Chemical Co., Ltd.) was diluted with pure water and then dealkalized with a cation exchange resin (Diaion SK1BH available from Mitsubishi Chemical Corporation) to prepare a silicic acid solution (referred to as a "preparation liquid-C" hereinafter) having a SiO₂, concentration of 2% by weight.

Next, to 0.5 kg of the preparation liquid-A, 2 kg of pure water was added to adjust the solids concentration to 2% by weight. Thereafter, the resulting liquid was heated to a temperature of 90°C, then to the liquid were slowly added 1.7 kg of the preparation liquid-B and 1.325 kg of the preparation liquid-C, and they were heat-treated in an autoclave at a temperature of 175°C for 18 hours. The resulting mixed liquid was concentrated to prepare a water dispersion sol (referred to as a "preparation liquid-D" hereinafter) containing, as solids content, 20% by weight of core-shell type metal oxide fine particles (2) wherein the surfaces of the metal oxide fine particles (1) as core particles were coated with a composite oxide of silicon and zirconium.

Subsequently, to 600 g of the preparation liquid-A, 240 g of methanol (sold by Chusei Oil Co., Ltd., the same shall apply hereinafter) was added, and they were stirred. Thereafter, 15 g of γ-glycidoxypropyltrimethoxysilane (TSL8350 available from GE Toshiba Silicones Co., Ltd.) was added as a silane coupling agent, and the resulting liquid was heat-treated at a temperature of 50°C for 24 hours. The methanol contained as a dispersion solvent was removed by a rotary evaporator, and the resulting liquid was concentrated until the solids concentration became 20% by weight, to prepare a sol containing metal oxide fine particles (3) wherein the surfaces of the metal oxide fine particles (1) were given epoxy-ring-containing groups. That is to say, a water dispersion sol (referred to as a "preparation liquid-E" hereinafter) containing, as solids content, 20% by weight of the metal oxide fine particles (3) each having an epoxy ring-containing group on the surface was obtained.

The mean particle diameter of the metal oxide fine particles (3) contained in the resulting preparation liquid-E was about 10 nm. When titanium, tin and silicon constituting the metal oxide fine particle (3) were represented by TiO₂, SnO₂ and SiO₂, respectively, the weight ratio of TiO₂ to SnO₂ was about 11/1 (TiO₂/SnO₂), and the weight ratio of (TiO₂+SnO₂) to SiO₂ was about 8/2 ((TiO₂+SnO₂)/SiO₂).

Further, to 300 g of the preparation liquid-D, 240 g of methanol was added, and they were stirred. Thereafter, 15 g of γ-glycidoxypropyltrimethoxysilane (TSL8350 available from GE Toshiba Silicones Co., Ltd.) was added as a silane coupling agent, and the resulting liquid was heat-treated at a temperature of 50°C for 24 hours. The methanol contained as a dispersion solvent was removed by a rotary evaporator, and the resulting liquid was concentrated until the solids concentration became 20% by weight, to prepare a sol containing core-shell type metal oxide fine particles (4) wherein the surfaces of the metal oxide fine particles (2) were given epoxy-ring-containing groups. That is to say, a water dispersion sol (referred to as a "preparation liquid-F" hereinafter) containing, as solids content, 20% by weight of the metal oxide fine particles (4) each having an epoxy ring-containing group on the surface was obtained.

The mean particle diameter of the metal oxide fine particles (4) contained in the resulting preparation liquid-F was about 11 nm. When titanium, tin and silicon constituting the core of the metal oxide fine particle (4) were represented by TiO₂, SnO₂ and SiO₂, respectively, the weight ratio of TiO₂ to SnO₂ was about 11/1 (TiO₂/SnO₂), and the weight ratio of (TiO₂+SnO₂) to SiO₂ was about 8/2 ((TiO₂+SnO₂)/SiO₂). When silicon and zirconium constituting the shell of the metal oxide fine particle (4) were represented by SiO₂ and ZrO₂, respectively, the weight ratio of SiO₂ to ZrO₂ was about 3/1 (SiO₂/ZrO₂). Further, the weight ratio of the core to the shell in the metal oxide fine particle (4) was about 100/7 (core/shell).

### (2) Preparation of thermosetting coating composition

As an elastomer having a carboxyl group, a commercially available urethane elastomer "Superflex 420NS" (water-dispersible urethane elastomer available from Dai-Ichi Kogyo Seiyaku Co., Ltd., solids concentration: 32% by weight, glass transition point (Tg): -10°C, elongation: 300%) was prepared. To 120 g of the urethane elastomer "Superflex 420NS", 245 g of the preparation liquid-F containing the metal oxide fine particles (4) was added, and they were stirred at a temperature of 30°C for 24 hours. Thereafter, the resulting liquid was placed in an autoclave and reacted at a temperature of 120°C for 2 hours to prepare a composite polymer. Subsequently, 480 g of methanol and 0.5 g of a silicone-based surface active agent ("SILWET L-7001" available from Nippon Unicar Co., Ltd.) as a surface active agent were added, and the resulting liquid was stirred at a temperature of 10°C for 24 hours.

Thus, a thermosetting coating composition (example coating material P1) containing a composite polymer obtained by the reaction of the elastomer (A) with the metal oxide fine particles (B) was prepared.

### Example 2

As an elastomer having a carboxyl group, a commercially available urethane elastomer "Superflex 460S" (water-dispersible urethane elastomer available from Dai-Ichi Kogyo Seiyaku Co., Ltd., solids concentration: 38% by weight, glass transition point (Tg): -25°C, elongation: 900%) was prepared.

To 120 g of the urethane elastomer "Superflex 460S", 290 g of the preparation liquid-F containing the metal oxide fine particles (4) was added, and they were stirred at a temperature of 30°C for 24 hours. Thereafter, the resulting liquid was placed in an autoclave and reacted at a temperature of 140°C for 1 hour to prepare a composite polymer. Subsequently, 600 g of methanol and 0.6 g of a silicone-based surface active agent ("SILWET L-7001" available from Nippon Unicar Co., Ltd.) as a surface active agent were added, and the resulting liquid was stirred at a temperature of 10°C for 24 hours.

Thus, a thermosetting coating composition (example coating material P2) containing a composite polymer obtained by the reaction of the elastomer (A) with the metal oxide fine particles (B) was prepared.

### Example 3

A thermosetting coating composition (example coating material P3) was prepared in the same manner as in Example 1, except that the preparation liquid-E containing the metal oxide fine particles (3) was used instead of the preparation liquid-F.

### Example 4

A thermosetting coating composition (example coating material P4) was prepared in the same manner as in Example 1, except that the amount of the preparation liquid-F added was changed as shown in Table 1.

### Comparative Example 1

### (1) Preparation of metal oxide fine particles having no epoxy ring-containing group

To 300 g of the preparation liquid-D (water dispersion sol containing core-shell type metal oxide fine particles) prepared in Example 1, 240 g of methanol was added to replace water contained as a dispersion solvent with methanol. Thereafter, the resulting liquid was concentrated until the solids concentration became 20% by weight, to prepare an organosol containing core-shell type metal oxide fine particles (5) having no epoxy ring-containing group. That is to say, a methanol dispersion sol (referred to as a "preparation liquid-G" hereinafter) containing, as solids content, 20% by weight of the core-shell type metal oxide fine particles (5) having no epoxy ring-containing group was obtained.

The mean particle diameter of the metal oxide fine particles (5) contained in the resulting preparation liquid-G was about 11 nm. When titanium, tin and silicon constituting the core of the metal oxide fine particle (5) were represented by TiO₂, SnO₂ and SiO₂, respectively, similarly to the metal oxide fine particles (4), the weight ratio of TiO₂ to SnO₂ was about 11/1 (TiO₂/SnO₂), and the weight ratio of (TiO₂+SnO₂) to SiO₂ was about 8/2 ((TiO₂+SnO₂)/SiO₂). When silicon and zirconium constituting the shell of the metal oxide fine particle (5) were represented by SiO₂ and ZrO₂, respectively, the weight ratio of SiO₂ to ZrO₂ was about 3/1 (SiO₂/ZrO₂). Further, the weight ratio of the core to the shell in the metal oxide fine particle (5) was about 100/7 (core/shell).

### (2) Preparation of coating composition

As an elastomer, a commercially available urethane elastomer "Superflex 110" (water-dispersible urethane elastomer available from Dai-Ichi Kogyo Seiyaku Co., Ltd., solids concentration: 32% by weight, glass transition point (Tg): 48°C, elongation: 5%) was prepared. To 120 g of the urethane elastomer "Superflex 110", 480 g of methanol, 245 g of the preparation liquid-G containing the metal oxide fine particles (5) and 0.5 g of a silicone-based surface active agent ("SILWET L-7001" available from Nippon Unicar Co., Ltd.) as a surface active agent were added, and they were stirred at a temperature of 10°C for 24 hours.

Thus, a coating composition (comparative example coating material C1) containing the elastomer having Tg of higher than 0°C and an elongation of less than 200% and the metal oxide fine particles (5) having no epoxy ring-containing group was prepared.

### Comparative Example 2

To 120 g of the urethane elastomer "Superflex 420NS", 245 g of the preparation liquid-F containing the metal oxide fine particles (4) was added, and they were stirred at a temperature of 30°C for 24 hours. Thereafter, 480 g of methanol and 0.5 g of a silicone-based surface active agent ("SILWET L-7001" available from Nippon Unicar Co., Ltd.) as a surface active agent were added, and the resulting liquid was stirred at a temperature of 10°C for 24 hours.

Thus, a thermosetting coating composition (comparative example coating material C2) in which the elastomer (A) and the metal oxide fine particles (B) were contained but they had not been reacted with each other was prepared.

### Comparative Example 3

To 120 g of the urethane elastomer "Superflex 460S", 600 g of methanol, 290 g of the preparation liquid-G containing the metal oxide fine particles (5) and 0.6 g of a silicone-based surface active agent ("SILWET L-7001" available from Nippon Unicar Co., Ltd.) as a surface active agent were added, and they were stirred at a temperature of 10°C for 24 hours.

Thus, a coating composition (comparative example coating material C3) containing the elastomer and the metal oxide fine particles (5) having no epoxy ring-containing group was prepared.

### Comparative Example 4

To 120 g of the urethane elastomer "Superflex 420NS", 480 g of methanol, 129 g of the preparation liquid-G containing the metal oxide fine particles (5) and 0.5 g of a silicone-based surface active agent ("SILWET L-7001" available from Nippon Unicar Co., Ltd.) as a surface active agent were added, and they were stirred at a temperature of 10°C for 24 hours.

Thus, a coating composition (comparative example coating material C4) containing the elastomer and the metal oxide fine particles (5) having no epoxy ring-containing group was prepared.

In Table 1, the elastomers and the preparation liquids containing the metal oxide fine particles contained in the coating compositions are shown. The meanings of the symbols shown in the following Table 1 are as follows.

### (1) Elastomer

SF-420NS: Superflex 420NS
SF-460S: Superflex 460S
SF-110: Superflex 110

### (2) Preparation liquid containing metal oxide fine particles

Preparation liquid-E: water dispersion sol containing metal oxide fine particles each having epoxy ring-containing group

Preparation liquid-F: water dispersion sol containing core-shell type metal oxide fine particles each having epoxy ring-containing group

Preparation liquid-G: methanol dispersion sol containing core-shell type metal oxide fine particles having no epoxy ring-containing group

**Table 1 (Preparation of coating compositions for forming primer layer)**

| | Example coating material | | | | Comparative example coating material | | | |
|---|---|---|---|---|---|---|---|---|
| | P1 | P2 | P3 | P4 | C1 | C2 | C3 | C4 |
| (1) Elastomer | | | | | | | | |
| (weight (g)) | | | | | | | | |
| SF-420NS | 120 | - | 120 | 120 | - | 120 | - | 120 |
| SF-460S | - | 120 | - | - | - | - | 120 | - |
| SF-110 | - | - | - | - | 120 | - | - | - |
| (2) Preparation liquid containing metal oxide fine particles | | | | | | | | |
| (weight (g)) | | | | | | | | |
| Preparation liquid-E | - | - | 290 | - | - | - | - | - |
| Preparation liquid-F | 245 | 290 | - | 129 | - | 245 | - | - |
| Preparation liquid-G | - | - | - | - | 245 | - | 290 | 129 |

### Preparation of coating composition for forming hard coat layer

### Preparation Example

### (1) Preparation of hard coating material-1

To 100 g of γ-glycidoxypropyltrimethoxysilane (TSL8350 available from GE Toshiba Silicones Co., Ltd.), 50 g of methanol was added, and with stirring, 25 g of 0.01N hydrochloric acid was dropwise added. The resulting liquid was further stirred at room temperature for 24 hours to perform hydrolysis.

Subsequently, to the hydrolysis liquid, 380 g of the preparation liquid-G (organosol containing core-shell type metal oxide fine particles) prepared in Comparative Example 1, 1 g of acetylacetone aluminum (available from Kishida Chemical Co., Ltd.) as a catalyst and 1.0 g of a silicone-based surface active agent ("SILWET L-7001" available from Nippon Unicar Co., Ltd.) as a leveling agent were added, and they were stirred at room temperature for 24 hours to prepare a coating composition for forming a hard coat layer (hard coating material H1).

### (2) Preparation of hard coating material-2

70 g of γ-glycidoxypropyltrimethoxysilane (TSL8350 available from GE Toshiba Silicones Co., Ltd.), 30 g of γ-glycidoxypropylmethyldiethoxysilane (TSL8355 available from GE Toshiba Silicones Co., Ltd.) and 50 g of methanol were mixed, and with stirring, 21 g of 0.01N hydrochloric acid was dropwise added. The resulting liquid was further stirred at room temperature for 24 hours to perform hydrolysis.

Subsequently, to the hydrolysis liquid, 390 g of the preparation liquid-G (organosol containing core-shell type metal oxide fine particles) prepared in Comparative Example 1, 1 g of acetylacetone aluminum (available from Kishida Chemical Co., Ltd.) as a catalyst and 1.0 g of a silicone-based surface active agent ("SILWET L-7001" available from Nippon Unicar Co., Ltd.) as a leveling agent were added, and they were stirred at room temperature for 24 hours to prepare a coating composition for forming a hard coat layer (hard coating material H2).

### (3) Preparation of hard coating material-3

To 100 g of γ-glycidoxypropyltrimethoxysilane (TSL8350 available from GE Toshiba Silicones Co., Ltd.), 50 g of methanol was added, and with stirring, 25 g of 0.01N hydrochloric acid was dropwise added. The resulting liquid was further stirred at room temperature for 24 hours to perform hydrolysis.

Subsequently, to the hydrolysis liquid, 160 g of the preparation liquid-G (organosol containing core-shell type metal oxide fine particles) prepared in Comparative Example 1, 1 g of acetylacetone aluminum (available from Kishida Chemical Co., Ltd.) as a catalyst and 1.0 g of a silicone-based surface active agent ("SILWET L-7001" available from Nippon Unicar Co., Ltd.) as a leveling agent were added, and they were stirred at room temperature for 24 hours to prepare a coating composition for forming a hard coat layer (hard coating material H3).

### Preparation of coating composition for forming antireflection film and coating composition for top coat Preparation Example

### (1) Preparation of coating material for antireflection film

10 g of tetraethoxysilane (available from Kishida Chemical Co., Ltd.), 3 g of methyltrimethoxysilane (TSL8113 available from GE Toshiba Silicones Co., Ltd.) and 300 g of isopropyl alcohol (available from Kishida Chemical Co., Ltd.) were mixed, and with stirring, 5 g of 0.1N hydrochloric acid was dropwise added. The resulting liquid was further stirred at a temperature of 30°C for 24 hours to perform hydrolysis.

Subsequently, to the hydrolysis liquid, 50 g of a hollow silica sol "THRULYA" (trade name, isopropyl alcohol dispersion sol available from Catalysts & Chemicals Industries Co., Ltd. and containing 20% by weight of hollow silica having mean particle diameter of 60 nm) was added, and they were stirred at a temperature of 30°C for 24 hours to perform aging. Thereafter, 0.1 g of acetylacetone aluminum (available from Kishida Chemical Co., Ltd.) as a catalyst was added, and the resulting liquid was stirred for 24 hours with cooling to a temperature of 10°C, to prepare a coating composition for forming an antireflection film (antireflection film coating material).

### (2) Preparation of coating material for top coat (for forming water-repellent film)

10 g of a fluorine compound having a chemical formula CF₃(CF₂)₇(CH₂)₂Si(OCH₃)₃ (TSL8233 available from GE Toshiba Silicones Co., Ltd.) and 200 g of isopropyl alcohol (available from Kishida Chemical Co., Ltd.) were mixed, and with stirring, 2 g of 0.01N hydrochloric acid was dropwise added. The resulting liquid was further stirred at a temperature of 30°C for 24 hours to perform hydrolysis.

Subsequently, to the hydrolysis liquid, 200 g of acetylacetone (available from Kishida Chemical Co., Ltd.) and 0.2 g of acetylacetone aluminum (available from Kishida Chemical Co., Ltd.) were added, and they were stirred at room temperature for 3 hours to prepare a coating composition for top coat (coating material for top coat).

### Preparation of plastic lens base for tests

### Example 5

### (1) Formation of primer layer

A necessary number of the following commercially available plastic lens base materials for the following tests and evaluation were prepared.
(1) MR-8 (monomer name, available from Mitsui Chemicals, Inc., plastic lens base material having refractive index of 1.60)
(2) MR-7 (monomer name, available from Mitsui Chemicals, Inc., plastic lens base material having refractive index of 1.67)
(3) MR-174 (monomer name, available from Mitsui Chemicals, Inc., plastic lens base material having refractive index of 1.74)

Subsequently, the plastic lens base materials were immersed in a KOH aqueous solution, which had a concentration of 10% by weight and was maintained at a temperature of 40°C, for 2 minutes to perform etching. Then, the plastic lens base materials were taken out, washed with water and then sufficiently dried.

The surfaces of the resulting plastic lens base materials were coated with the primer layer-forming thermosetting coating compositions prepared in Examples 1 to 4 (example coating materials P1 to P4), respectively, in combinations shown in Table 2, to form coating films. The coating with these coating compositions was carried out by dipping (pull-up rate: 150 mm/min).

Then, the coating films were dried at ordinary temperature for 1 minute and then heat-treated at a temperature of 100°C for 20 minutes to precure the coating films (primer layers).

The film thickness of each of the thus formed primer layers after precure was approximately 0.8 to 1.0 µm.

### (2) Formation of hard coat layer

The surfaces of the precured primer layers were coated with the coating compositions for forming a hard coat layer (hard coating materials H1 to H3), respectively, in combinations shown in Table 2, to form coating films. The coating with these coating compositions was carried out by dipping (pull-up rate: 250 mm/min).

Next, the coating films were dried at a temperature of 90°C for 10 minutes and then heat-treated at a temperature of 110°C for 2 hours to cure the coating films (hard coat layers). Simultaneously with this curing, main cure of the primer layers was carried out.

In the case of forming an antireflection film by coating method (i.e., example base material-3), however, precure was carried out at a temperature of 100°C for 20 minutes, and main cure of the coating film was carried out in the later-described antireflection film formation step.

The film thickness of each of the thus formed hard coat layers after curing (example base materials-1, 2 and 4) and the hard coat layer after precure (example base material-3) was approximately 2.4 to 2.8 µm.

### (3) Formation of antireflection film layer

### (a) Formation of antireflection film by vacuum deposition

On each of the surfaces of the cured hard coat layers (except hard coat layer of example base-3), inorganic oxide components of the following constitution were deposited by vacuum deposition to form a layer of an antireflection film in which SiO₂ (0.06 λ), ZrO₂ (0.15 λ), SiO₂ (0.04 λ), ZrO₂ (0.25 λ) and SiO₂ (0.25 λ) were laminated in this order from the hard coat layer side to the atmosphere side. The design wavelength λ was 520 nm.

### (b) Formation of antireflection film by coating

The surface of the precured hard coat layer (i.e., hard coat layer of example base-3) was coated with the aforesaid coating composition for forming an antireflection film (antireflection film coating material) to form a coating film. The coating with this coating material was carried out by spin coating.

Next, the coating film was dried at ordinary temperature for 1 minute and then heat-treated at a temperature of 60°C for 10 minutes and further at a temperature of 120°C for 1 hour to cure the coating film (antireflection film layer). Simultaneously with this curing, main cure of the hard coat layer was carried out.

The thickness of the thus formed antireflection film layer after curing was approximately 0.1 µm.

Further, the surface of the antireflection film layer was coated with the coating composition for top coat (coating material for top coat) to form a coating film. The coating with this coating material was carried out by dipping (pull-up rate: 150 mm/min).

Subsequently, the coating film was dried at ordinary temperature for 1 minute and then heat-treated at a temperature of 120°C for 1 hour to cure the coating film (top coat layer). Thus, an example base-3 was prepared.

### Comparative Example 5

### (1) Formation of primer layer

In the same manner as in Example 5, the surfaces of the aforesaid plastic lens base materials were coated with the primer layer-forming thermosetting coating compositions prepared in Comparative Examples 1 to 4 (comparative example coating materials C1 to C4), respectively, in combinations shown in Table 3, and the resulting coating films (primer layers) were precured.

The film thickness of each of the thus formed primer layers after precure was approximately 0.8 to 1.0 µm.

### (2) Formation of hard coat layer

In the same manner as in the example, the surfaces of the primer layers were coated with the aforesaid coating compositions for forming a hard coat layer (hard coating materials H1 to H3), respectively, in combinations shown in Table 3, to form coating films, and the resulting coating films (hard coat layers) were cured. Simultaneously with this curing, main cure of the primer layers was carried out.

In the case of forming an antireflection film by coating method (i.e., comparative example base material-3), however, precure was carried out, and main cure of the coating film was carried out in the later-described antireflection film formation step, similarly to Example 5.

The film thickness of each of the thus formed hard coat layers after curing (comparative example base materials-1, 2 and 4) and the hard coat layer after precure (comparative example base material-3) was approximately 2.4 to 2.8 µm.

### (3) Formation of antireflection film layer

### (a) Formation of antireflection film by vacuum deposition

In the same manner as in Example 5, the aforesaid inorganic oxide components were deposited on each of the surfaces of the cured hard coat layers (except hard coat layer of comparative example base-3) by vacuum deposition to form a layer of an antireflection film. Thus, comparative example bases 1 and 2 and comparative example base 4 shown in Table 3 were prepared.

### (b) Formation of antireflection film by coating method

In the same manner as in Example 5, the surface of the precured hard coat layer (i.e., hard coat layer of comparative example base-3) was coated with the aforesaid coating composition for forming an antireflection film , (antireflection coating material) to form a coating film, and the coating film (antireflection film layer) was cured. Simultaneously with this curing, main cure of the hard coat layer was carried out.

The film thickness of the thus formed antireflection film layer after curing was approximately 0.1 µm.

Further, in the same manner as in Example 5, the surface of the antireflection film layer was coated with the coating composition for top coat (coating material for top coat) to form a coating film, and the coating film (top coat layer) was cured. Thus, a comparative example base-3 shown in Table 3 was prepared.

### Comparative Example 6

In order to illustrate the effect given by arranging the primer layer between the plastic base material and the hard coat layer, plastic lens bases having no primer layer, namely comparative example bases 5 to 7 shown in Table 3, were prepared.

These bases were prepared in the same manner as in Comparative Example 5, except that the step of "Formation of primer layer" in Comparative Example 5 was omitted. That is to say, on the plastic lens base material, a hard coat layer and an antireflection layer were laminated, and in the comparative example base 6, a top coat layer was further formed on the antireflection film layer.

The film thickness of each of the hard coat layers and the antireflection film layers formed on the plastic lens base materials was almost the same value as that obtained in Comparative Example 5.

### Evaluation tests of plastic lens base

The example bases 1 to 4 and the comparative example bases 1 to 7 obtained above were tested and evaluated in the following manner. The results are set forth in Table 2 and Table 3.

### Measurement and evaluation

### (1) Appearance (interference fringe)

In a box having black inner walls, a fluorescent lamp "Mellow 5N" (trade name, available from Toshiba Lighting & Technology Corporation, three band daylight fluorescent lamp) was installed, then the surfaces of the antireflection films of the example bases and the comparative example bases were allowed to reflect the light of the fluorescent lamp, and occurrence of rainbow pattern (interference fringes) due to interference of light was confirmed by visual observation. Then, the bases were evaluated by the following criteria.

- A:: Interference fringes are rarely observed.
- B:: Interference fringes are not conspicuous.
- C:: Interference fringes are conspicuous.
- D:: Glary interference fringes are observed.

### (2) Appearance (haze)

In a box having black inner walls, a fluorescent lamp "Mellow 5N" (trade name, available from Toshiba Lighting & Technology Corporation, three band daylight fluorescent lamp) was installed, then the example bases and the comparative example bases were vertically placed just under the fluorescent lamp, and transparency (degree of haze) of the bases was confirmed by visual observation. Then, the bases were evaluated by the following criteria.

- A:: There is no haze.
- B:: There is slight haze.
- C:: There is obvious haze.
- D:: There is conspicuous haze.

### (3) Scratch resistance test

The surfaces of the example bases and the comparative example bases were rubbed with Bonstar Steel Wool #0000 (available from Nihon Steel Wool Co., Ltd.), and scratching of the bases was judged by visual observation. Then, the bases were evaluated by the following criteria.

- A:: The surface is rarely scratched.
- B:: The surface is slightly scratched.
- C:: The surface is considerably scratched.
- D:: Most of the whole surface of the rubbed area is scratched.

### (4) Adhesion test

On the lens surfaces of the examples bases and the comparative example bases, cuts were made with a knife at regular intervals of 1 mm to form 100 squares each having a size of 1 mm², and a Cellophane adhesive tape was strongly pressed against each of the surfaces and then abruptly pulled in the direction of 90 degrees against the in-plane direction of the plastic lens base. These operations were repeated 5 times, and the number of unpeeled squares was counted. Then, the bases were evaluated by the following criteria.

Good: The number of unpeeled squares is 95 or more.
Bad: The number of unpeeled squares is less than 95.

### (5) Hot water resistance test

After the example bases and the comparative example bases were immersed in hot water, which was maintained at a temperature of 80°C, for 10 minutes, they were subjected to the same test as the above adhesion test, and they were evaluated by the following criteria.

Good: The number of unpeeled squares is 90 or more.
Bad: The number of unpeeled squares is less than 90.

### (6) Weathering resistance test

After the example bases and the comparative example bases were exposed to a xenon weather meter (X-75 model manufactured by Suga Test Instrument Co., Ltd.) for 200 hours, they were subjected to the same test as the above adhesion test, and they were evaluated by the following criteria.

Good: The number of unpeeled squares is 90 or more.
Bad: The number of unpeeled squares is less than 90.

### (7) Heat resistance test

The example bases and the comparative example bases were placed in a perfect oven (manufactured by Tabai Espec Corp.), heated for 5 minutes and taken out of the oven. The bases were evaluated by presence or absence of cracks immediately after they were taken out of the oven. Heating was carried out at heating temperatures of 60°C, 70°C, 80°C, 90°C and 100°C, and the highest temperature at which cracks did not occur was regarded as a heat resistance temperature.

### (8) Impact resistance test

A steel ball weighing 17 g was dropped from the height of 127 cm on the center of each of the example bases and the comparative example bases, and the bases were evaluated by the following criteria.

Good: The base is not broken.
Bad: The base is broken.

### (9) Dyeing property test

After the example bases and the comparative example bases were immersed in a black dye (available from Brain Power Incorporated), which was maintained at a temperature of 92°C, for 5 minutes, their luminous transmittances (STS-2 manufactured by FUJIKODEN Corporation) were measured, and the bases were evaluated by the following criteria.

Good: The transmittance is less than 70%.
Bad: The transmittance is not less than 70%.

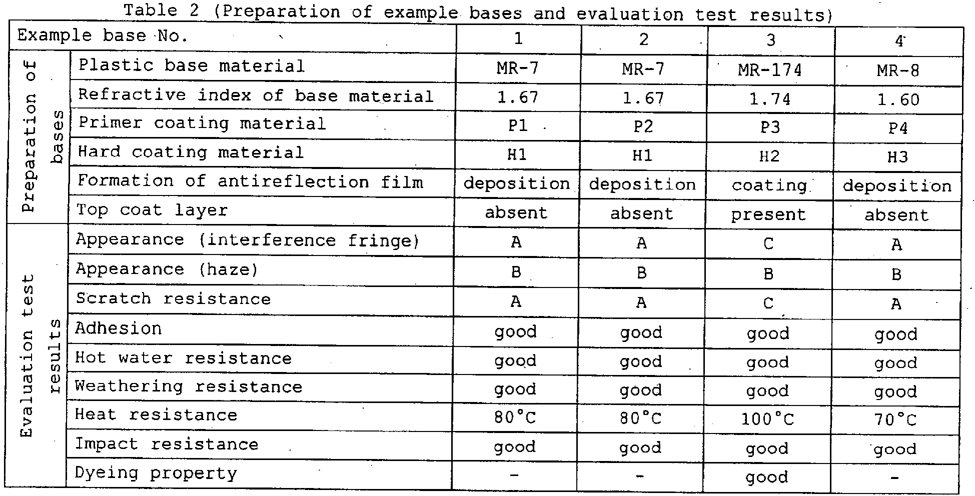

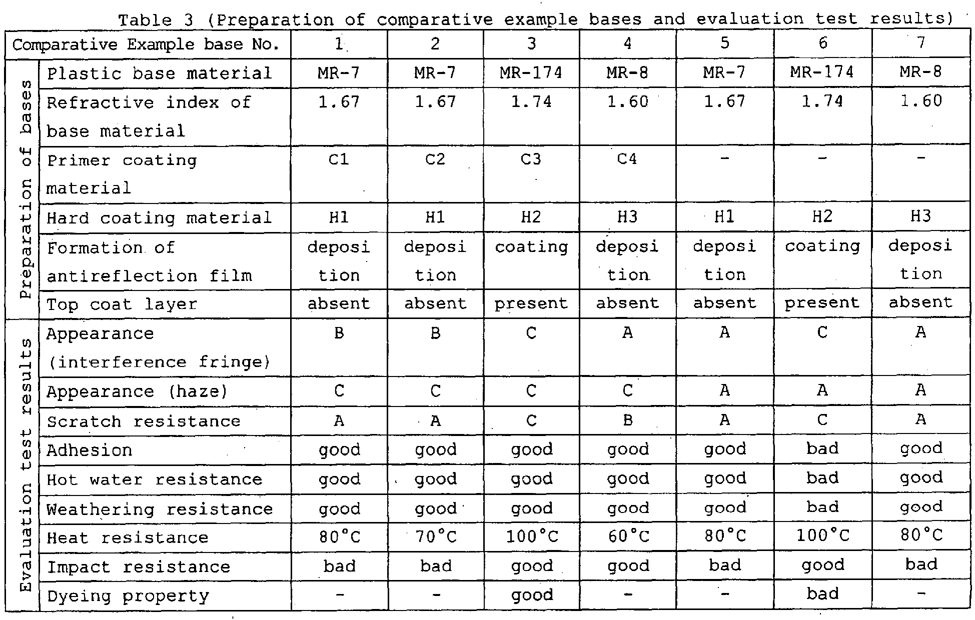

### INDUSTRIAL APPLICABILITY

The composite polymer and the thermosetting coating composition of the invention can be favorably used as materials for forming primer layers in optical articles, typically optical lenses such as spectacle lenses, and plastic articles such as tableware for home use and toys.

## Claims

1. A composite polymer obtained by reacting:
(A) a water-dispersible urethane elastomer having a carboxyl group with
(B) metal oxide fine particles each having an epoxy ring-containing group on the surface.

2. The composite polymer as claimed in claim 1, wherein the water-dispersible urethane elastomer (A) has the following properties (i) and (ii):
(i) the glass transition point (Tg) is not higher than 0°C, and
(ii) the elongation (elongation at break in accordance with JIS K6251) is in the range of 200 to 1,000%.

3. The composite polymer as claimed in claim 1 or claim 2, wherein the water-dispersible urethane elastomer (A) is obtained by reacting a polyisocyanate compound with a polyol compound in the presence of an acid diol compound.

4. The composite polymer as claimed in any one of claims 1 to 3, wherein the metal oxide fine particles (B) are fine particles of an oxide and/or fine particles of a composite oxide of one or more metallic elements selected from the group consisting of Ti, Fe, Zn, W, Sn, Ta, Zr, Sb, Nb, In, Ce, Si. Al, Y, Pb and Mo, each of said fine particles having an epoxy ring-containing group on the surface.

5. The composite polymer as claimed in claim 4, wherein the metal oxide fine particles (B) are obtained by treating surfaces of fine particles of an oxide and/or fine particles of a composite oxide of one or more metallic elements selected from the group consisting of Ti, Fe, Zn, W, Sn, Ta, Zr, Sb, Nb, In, Ce, Si, Al, Y, Pb and Mo with a silane coupling agent having an epoxy ring-containing group;
or
the metal oxide fine particles (B) are obtained by forming a coating layer composed of a composite oxide of Si and Zr and/or Al on surfaces of fine particles of an oxide and/or fine particles of a composite oxide of one or more metallic elements selected from the group consisting of Ti, Fe, Zn, W, Sn, Ta, Zr, Sb, Nb, In, Ce, Si, Al, Y, Pb and Mo and treating a surface of the coating layer with a silane coupling agent having an epoxy ring-containing group.

6. The composite polymer as claimed in any one of claims 1 to 5. wherein the epoxy ring-containing group of the metal oxide fine particles (B) is a glycidyl group.

7. The composite polymer as claimed in any one of claims 1 to 6, wherein the metal oxide fine particles (B) have a mean particle diameter of 1 to 50 nm.

8. The composite polymer as claimed in any one of claims 1 to 7, wherein a weight ratio ((A)/(B)) of the water-dispersible urethane elastomer (A) to the metal oxide fine particles (B) is in the range of 90/10 to 30/70.

9. The composite polymer as claimed in any one of claims 1 to 8, which has a chemical structure represented by the following formula (1):
-CH₂CH(OH)CH(R^{a})OCO- (I)
wherein R^{a} is -H, -CH₃ or -CH₂-.

10. A thermosetting coating composition comprising the composite polymer of any one of claims 1 to 9.

11. An article having:
a plastic base material,
a primer layer formed on an upper surface of the plastic base material and
comprising a thermally cured product of the composite polymer of any one of claims 1 to 9, and
a hard coat layer formed on an upper surface of the primer layer.

12. The article as claimed in claim 11, wherein the primer layer has a thickness of 0.2 to 5.0 µm and a refractive index of not less than 1.52.

13. The article as claimed in any one of claims 11 or claim 12, wherein the primer layer is formed from the thermosetting coating composition of claim 10.

14. The article as claimed in any one of claims 11 to 13, wherein an antireflection film is formed on an upper surface of the hard coat layer.

15. The article as claimed in any one of claims 11 to 14, which is an optical article preferably
wherein the optical article is an optical lens.

## Patentansprüche

1. Verbundpolymer, das durch Reagieren erhalten wird von:
(A) einem wasserdispergierbaren Urethanelastomer, das eine Carboxylgruppe aufweist, mit
(B) feinen Metalloxidteilchen, die jeweils eine Epoxidring enthaltende Gruppe an der Oberfläche aufweisen.

2. Verbundpolymer nach Anspruch 1, wobei das wasserdispergierbare Urethanelastomer (A) die folgenden Eigenschaften (i) und (ii) aufweist:
(i) die Glasübergangstemperatur (Tg) ist nicht höher als 0 °C und
(ii) die Dehnung (Bruchdehnung JIS K6251 gemäß) liegt im Bereich von 200 bis 1.000 %.

3. Verbundpolymer nach Anspruch 1 oder Anspruch 2, wobei das wasserdispergierbare Urethanelastomer (A) durch Reagieren einer Polyisocyanatverbindung mit einer Polyolverbindung in Gegenwart einer sauren Diolverbindung erhalten wird.

4. Verbundpolymer nach einem der Ansprüche 1 bis 3, wobei die feinen Metalloxidteilchen (B) feine Teilchen eines Oxids und/oder feine Teilchen eines Verbundoxids eines oder mehrerer Metallelemente ausgewählt aus der Gruppe bestehend aus Ti, Fe, Zn, W, Sn, Ta, Zr, Sb, Nb, In, Ce, Si, Al, Y, Pb und Mo sind, wobei jedes der feinen Teilchen eine Epoxidring enthaltende Gruppe an der Oberfläche aufweist.

5. Verbundpolymer nach Anspruch 4, wobei die feinen Metalloxidteilchen (B) durch Behandeln von Oberflächen feiner Teilchen eines Oxids und/oder feiner Teilchen eines Verbundoxids eines oder mehrerer Metallelemente ausgewählt aus der Gruppe bestehende aus Ti, Fe, Zn, W, Sn, Ta, Zr, Sb, Nb, In, Ce, Si, Al, Y, Pb und Mo mit einem Silankopplungsmittel, das eine Epoxidring enthaltende Gruppe aufweist, erhalten werden;
oder
die feinen Metalloxidteilchen (B) durch Bilden einer Beschichtungsschicht bestehend aus einem Verbundoxid von Si und Zr und/oder Al auf Oberflächen von feinen Teilchen eines Oxids und/oder feinen Teilchen eines Verbundoxids eines oder mehrerer Metallelemente ausgewählt aus der Gruppe bestehend aus Ti, Fe, Zn, W, Sn, Ta, Zr, Sb, Nb, In, Ce, Si, Al, Y, Pb und Mo und Behandeln einer Oberfläche der Beschichtungsschicht mit einem Silankopplungsmittel, das eine Epoxidring enthaltende Gruppe aufweist, erhalten werden.

6. Verbundpolymer nach einem der Ansprüche 1 bis 5, wobei die Epoxidring enthaltende Gruppe der feinen Metalloxidteilchen (B) eine Glycidylgruppe ist.

7. Verbundpolymer nach einem der Ansprüche 1 bis 6, wobei die feinen Metalloxidteilchen (B) einen mittleren Teilchendurchmesser von 1 bis 50 nm aufweisen.

8. Verbundpolymer nach einem der Ansprüche 1 bis 7, wobei ein Gewichtsverhältnis von ((A)/(B)) des wasserdispergierbaren Urethanelastomers (A) zu den feinen Metalloxidteilchen (B) im Bereich von 90/10 bis 30/70 liegt.

9. Verbundpolymer nach einem der Ansprüche 1 bis 8, das eine chemische Struktur aufweist, die durch die folgende Formel (I) dargestellt ist:
-CH₂CH (OH) CH (R^{a}) OCO- (i)
wobei R^{a} -H, -CH₃ oder -CH₂- ist.

10. Duroplast-Beschichtungszusammensetzung umfassend das Verbundpolymer nach einem der Ansprüche 1 bis 9.

11. Artikel, der Folgendes aufweist:
ein Kunststoffgrundmaterial,
eine Grundierschicht, die auf einer oberen Fläche des Kunststoffgrundmaterials gebildet ist und ein wärmeausgehärtetes Produkt des Verbundpolymers nach einem der Ansprüche 1 bis 9 umfasst, und
eine Hartlackschicht, die auf einer oberen Fläche der Grundierschicht gebildet ist.

12. Artikel nach Anspruch 11, wobei die Grundierschicht eine Dicke von 0,2 bis 5,0 µm und einen Brechungsindex von nicht weniger als 1,52 aufweist.

13. Artikel nach einem der Ansprüche 11 oder Anspruch 12, wobei die Grundierschicht aus der Duroplast-Beschichtungszusammensetzung nach Anspruch 10 gebildet ist.

14. Artikel nach einem der Ansprüche 11 bis 13, wobei ein Antireflexfilm auf einer oberen Fläche der Hartlackschicht gebildet ist.

15. Artikel nach einem der Ansprüche 11 bis 14, der ein optischer Artikel ist,
wobei bevorzugt der optische Artikel eine optische Linse ist.

## Revendications

1. Polymère composite obtenu en faisant réagir :
(A) un élastomère d'uréthane dispersable dans l'eau ayant un groupement carboxyle avec
(B) de fines particules d'oxyde(s) métallique(s), ayant chacune en surface un groupement contenant un noyau époxy.

2. Polymère composite selon la revendication 1, dans lequel l'élastomère d'uréthane dispersable dans l'eau (A) a les propriétés (i) et (ii) suivantes :
(i) la température de transition vitreuse (Tg) n'est pas supérieure à 0 °C, et
(ii) l'allongement (allongement à la rupture selon la norme JIS K6251) se situe dans la plage de 200 à 1000 %.

3. Polymère composite selon la revendication 1 ou la revendication 2, dans lequel l'élastomère d'uréthane dispersable dans l'eau (A) est obtenu par réaction d'un composé de polyisocyanate avec un composé de polyol en présence d'un composé de diol d'acide.

4. Polymère composite selon l'une quelconque des revendications 1 à 3, dans lequel les fines particules d'oxyde(s) métallique(s) (B) sont de fines particules d'un oxyde et/ou de fines particules d'un oxyde composite d'un ou plusieurs éléments métalliques choisis dans le groupe constitué de Ti, Fe, Zn, W, Sn, Ta, Zr, Sb, Nb, In, Ce, Si, Al, Y, Pb et Mo, chacune desdites fines particules ayant un groupement contenant un noyau époxy en surface.

5. Polymère composite selon la revendication 4, dans lequel les fines particules d'oxyde(s) métallique(s) sont obtenues en traitant les surfaces de fines particules d'un oxyde et/ou de fines particules d'un oxyde composite d'un ou plusieurs éléments métalliques choisis dans le groupe constitué de Ti, Fe, Zn, W, Sn, Ta, Zr, Sb, Nb, In, Ce, Si, Al, Y, Pb et Mo avec un agent de couplage de type silane ayant un groupement contenant un noyau époxy ;
ou
les fines particules d'oxyde(s) métallique(s) (B) sont obtenues en formant une couche de revêtement composée d'un oxyde composite de Si et de Zr et/ou d'Al sur des surfaces de fines particules d'un oxyde et/ou de fines particules d'un oxyde composite d'un ou plusieurs éléments métalliques choisis dans le groupe constitué de Ti, Fe, Zn, W, Sn, Ta, Zr, Sb, Nb, In, Ce, Si, Al, Y, Pb et Mo et en traitant une surface de la couche de revêtement avec un agent de couplage de type silane ayant un groupement contenant un noyau époxy.

6. Polymère composite selon l'une quelconque des revendications 1 à 5, dans lequel le groupement contenant un noyau époxy des fines particules d'oxyde(s) métallique(s) (B) est un groupement glycidyle.

7. Polymère composite selon l'une quelconque des revendications 1 à 6, dans lequel les fines particules d'oxyde(s) métallique(s) (B) ont un diamètre particulaire moyen de 1 à 50 nm.

8. Polymère composite selon l'une quelconque des revendications 1 à 7, dans lequel un rapport pondéral ((A)/(B)) de l'élastomère d'uréthane dispersable dans l'eau (A) aux fines particules d'oxyde(s) métallique(s) (B) se situe dans la plage de 90/10 à 30/70.

9. Polymère composite selon l'une quelconque des revendications 1 à 8, qui a une structure chimique représentée par la formule (I) suivante :
-CH₂CH (OH) CH (R^{a}) OCO- (I)
dans laquelle R^{a} est -H, -CH₃ ou -CH₂-.

10. Composition de revêtement thermodurcissable comprenant le polymère composite selon l'une quelconque des revendications 1 à 9.

11. Article ayant :
un matériau de base plastique,
une couche de fond formée sur une surface supérieure du matériau de base plastique et comprenant un produit durci à la chaleur du polymère composite selon l'une quelconque des revendications 1 à 9, et
une couche de revêtement dure formée sur une surface supérieure de la couche de fond.

12. Article selon la revendication 11, dans lequel la couche de fond a une épaisseur de 0,2 à 5,0 µm et un indice de réfraction de pas moins de 1,52.

13. Article selon l'une quelconque des revendications 11 ou 12, dans lequel la couche de fond est formée à partir de la composition de revêtement thermodurcissable de la revendication 10.

14. Article selon l'une quelconque des revendications 11 à 13, dans lequel un film antiréfléchissant est formé sur une surface supérieure de la couche de revêtement dure.

15. Article selon l'une quelconque des revendications 11 à 14, qui est un article optique, de préférence dans lequel l'article optique est une lentille optique.
